# EUROPEAN PATENT SPECIFICATION

(11) **EP 2 655 183 B1**
(45) Date of publication and mention of the grant of the patent: **01.06.2016**
(21) Application number: 11802936.2
(22) Date of filing: 21.12.2011
(51) Int. Cl.: B64C 1/40, B60R 16/02, F16L 33/02, H02G 3/32

(54) **FASTENING ARRANGEMENT FOR FASTENING A COMPONENT OF AN AIRCRAFT OR SPACECRAFT, ADHESIVE RETAINER OF A FASTENING ARRANGEMENT OF THIS TYPE AND AIRCRAFT OR SPACECRAFT HAVING A FASTENING ARRANGEMENT OF THIS TYPE AND/OR AN ADHESIVE RETAINER OF THIS TYPE**
BEFESTIGUNGSANORDNUNG ZUM BEFESTIGEN EINER KOMPONENTE EINES LUFT- ODER RAUMFAHRZEUGS, KLEBEHALTERUNG EINER DERARTIGEN BEFESTIGUNGSANORDNUNG UND LUFT- ODER RAUMFAHRZEUG MIT EINER BEFESTIGUNGSANORDNUNG DIESER ART UND/ODER KLEBEHALTERUNG DIESER ART
AGENCEMENT DE FIXATION DESTINÉ À FIXER UN ÉLÉMENT D'UN AVION OU D'UN ENGIN SPATIAL, DISPOSITIF DE RETENUE ADHÉSIF D'UN AGENCEMENT DE FIXATION DE CE TYPE ET AVION OU ENGIN SPATIAL PRÉSENTANT UN AGENCEMENT DE FIXATION DE CE TYPE ET/OU DISPOSITIF DE RETENUE ADHÉSIF DE CE TYPE

(30) Priority: 23.12.2010 DE 102010064060; 23.12.2010 US 201061426662 P
(43) Date of publication of application: 30.10.2013
(73) Proprietor: Airbus Operations GmbH, 21129 Hamburg (DE)
(72) Inventor: GOEHLICH, Robert Alexander, 22761 Hamburg (DE); BRAUN, Simon, 72127 Kusterdingen (DE)
(74) Representative: Isarpatent
(86) International application number: PCT/EP2011/073582
(87) International publication number: WO 2012/085078

(56) References cited:
- EP-A2- 1 734 630
- DE-A1- 10 154 440
- DE-U1- 20 115 732
- US-A1- 2009 094 799

## Description

The present invention relates to a fastening arrangement for fastening a component of an aircraft or spacecraft, an adhesive retainer of a fastening arrangement of this type and an aircraft or spacecraft having a fastening arrangement of this type and/or having an adhesive retainer of this type.

Although applicable to any aircraft or spacecraft, the present invention will be described in greater detail by way of example with reference to an aircraft.

In an aircraft, components such as electrical and/or mechanical supply lines or the like must be fastened to structural elements of the aircraft. For example, so-called stringers or formers of a fuselage of the aircraft are referred to as structural elements. In this case, the stringers extend substantially in the longitudinal direction of the fuselage, whereas the formers extend transverse to the stringers. Conventionally, the stringers and the formers consist of aluminium or fibre-reinforced plastics materials. It is known operationally to the applicant that the components to be fastened are fastened to the structural elements by means of retainers. For this purpose, the structural elements are spot-drilled at corresponding positions and retainers are subsequently fastened by means of rivets in the holes which have been produced. The loads produced by the components are advantageously introduced into the aircraft fuselage by means of the retainers. The insertion of holes into the structural elements does however involve an enormous amount of work and cleaning and, in particular for structural elements made from fibre-reinforced plastics materials, a disadvantageous structural weakening. Furthermore, after the removal of an Incorrectly placed retainer, the holes disadvantageously remain In the corresponding structural element. Document EP1734630, which discloses all the features of the preamble of claim 1, is considered to be the closest prior art.

In order to counteract these disadvantages, the retainer can be glued to the structural element instead of riveted to the structural element. In this alternative fastening method, it has however proved disadvantageous that in order to be able to transmit the same loads from the retainer to the structural element as in the rivet connection, a high-strength adhesive system must be used. This means that in the case of an incorrectly placed retainer, this retainer can only be removed with damage to or even destruction of the structural element. Furthermore, long curing times during the placement of the retainer and fixing during curing are required. Furthermore, in order to avoid problems of quality in the adhesive joint, this joint is in general considerably oversized, which leads to cost and weight disadvantages. Time-consuming and costly cleaning and preparation of the adhesive region is also necessary in order to ensure the desired quality of the adhesive region. This is understandably worth avoiding.

It is thus an object of the present invention to provide an improved fastening arrangement for fastening a component of an aircraft or spacecraft, which arrangement eliminates the aforementioned disadvantages.

This object is achieved according to the invention by a fastening arrangement having the features of claim 1, an adhesive retainer having the features of claim 12 and/or an aircraft or spacecraft having the features of claim 13.

Accordingly, a fastening arrangement for fastening a component, in particular a supply line, of an aircraft or spacecraft is provided, comprising: a structural element of the aircraft or spacecraft; an adhesive retainer which comprises a flexible connection portion having an adhesive surface for placing onto the structural element and a retaining portion, operatively connected to the connection portion, for receiving the component, as least in portions; and an adhesive material which is arranged between the adhesive surface and the structural element.

According to the invention, the fibre reinforcement comprises at least one branching fibre braid which comprises main fibres and secondary fibres branching off from the main fibres. The fibre braid hereby passes through a large area, with the occurrent forces being uniformly distributed over the entire connection portion as a result. This improves the force transmission from the connection portion into the structural element, greater loads being transmittable as a result.

An adhesive retainer of a fastening arrangement of this type and an aircraft or spacecraft having a fastening arrangement of this type and/or an adhesive retainer of this type are further provided.

The idea on which the present invention is based consists in providing an adhesive retainer having a flexible connection portion which allows a planar support on the structural element. The flexibility allows the connection portion to adapt to a surface contour of the structural element, without a costly surface preparation being required. Structural damage caused by the insertion of holes in the structural element is avoided. In contrast to known approaches, it is possible to use an adhesive material having a comparatively weak adhesive effect. An adhesive retainer which has already been placed can hereby be easily removed or displaced without damage to the structural element.

Advantageous configurations and improvements of the fastening arrangement specified in claim 1 are found in the sub-claims.

According to a preferred embodiment, the adhesive retainer comprises fibre reinforcement. Particularly high strength and loading capacity of the adhesive retainer is hereby achieved at a low weight. This expands the possible range of application of the fastening arrangement. According to a preferred embodiment, a fibre density of the fibre reinforcement increases, starting from a peripheral region of the connection portion, towards the retaining portion, a variation in the stiffness of the connection portion being achieved as a result. A uniform force transmission from the retaining portion to the structural element hereby results.

According to a further preferred embodiment, the main fibres have a larger fibre cross-section than the secondary fibres. A configuration of the fibre braid which is compatible with the force flow is hereby possible, the weight of the fibre braid being advantageously reduced as a result.

According to a further preferred embodiment, the main fibres extend radially, starting from the retaining portion, in the direction of a peripheral region of the connection portion, the secondary fibres extending in intermediate regions between the main fibres, the fibre braid passing through the entire connection portion as a result. This increases the strength and allows the transmission of greater loads.

According to a further preferred embodiment, the main fibres of the fibre braid pass through the retaining portion, allowing an optimal force transmission from the components to the adhesive retainer as a result.

According to a further preferred embodiment, a material stiffness of the connection portion increases, starting from a peripheral region of the connection portion, towards the retaining portion. An optimal force transmission from the connection portion to the structural element is hereby ensured. This increases the reliability of the fastening arrangement:
According to a further preferred embodiment, a wall thickness of the connection portion increases, starting from a peripheral region of the connection portion, towards the retaining portion. A jump in thickness in a transition region between the connection portion and the structural element is hereby avoided, the durability and reliability of the fastening arrangement always being ensured as a result.

According to a further preferred embodiment, the retaining portion is operatively connected to the connection portion with a positive and/or non-positive fit, as a result of which the retaining portion is advantageously replaceable in the case of damage thereto or destruction thereof without complete removal of the adhesive retainer. Furthermore, the fastening arrangement can be used in a modular manner, as different retaining portions can be used in the form of a modular system according to the type of component to be fastened.

According to a further preferred embodiment, the retaining portion is formed integrally with the connection portion. Owing to the configuration of the connection portion and the retaining portion in one piece, a weight reduction emerges during the production of the adhesive retainer, the possible range of application of the fastening arrangement being expanded as a result.

According to a further preferred embodiment, the connection portion is impregnated with the adhesive material, which allows curing of the connection portion at the same time as the structural element, as a result of which an integral connection of these two components is ensured.

According to a further preferred embodiment, the adhesive surface of the connection portion comprises a layer of the adhesive material, the layer comprising a peelable protective film. This allows fast and convenient application of the adhesive retainer to form the fastening arrangement. The range of applications of the fastening arrangement is hereby expanded.

The invention will be described in detail by way of embodiments with reference to the accompanying figures of the drawings.

In the figures:
- Fig. 1: is a perspective view of an operationally known retainer for fastening components of an aircraft or spacecraft;
- Fig. 2A: is a cross-sectional view of a fastening arrangement according to a preferred embodiment of the present invention;
- Fig. 2B: is an enlarged view of a detail B according to Fig. 2A;
- Fig. 3A: is cross-sectional view of an adhesive retainer according to a preferred embodiment of the present invention;
- Fig. 3B: is an enlarged view of a detail B according to Fig. 3A;
- Fig. 4: is a plan view of the adhesive retainer according to Fig. 3A;
- Fig. 5: is a cross-sectional view of a fastening arrangement according to a further preferred embodiment of the present invention;
- Fig. 6: is a perspective view of the fastening arrangement according to Fig. 5;
- Fig. 7: is a cross-sectional view of a fastening arrangement according to yet another preferred embodiment of the present invention; and
- Fig. 8: is a perspective view of a fastening arrangement according to yet another embodiment of the present invention.

In the figures, like reference numerals denote like or functionally equivalent components, unless stated otherwise.

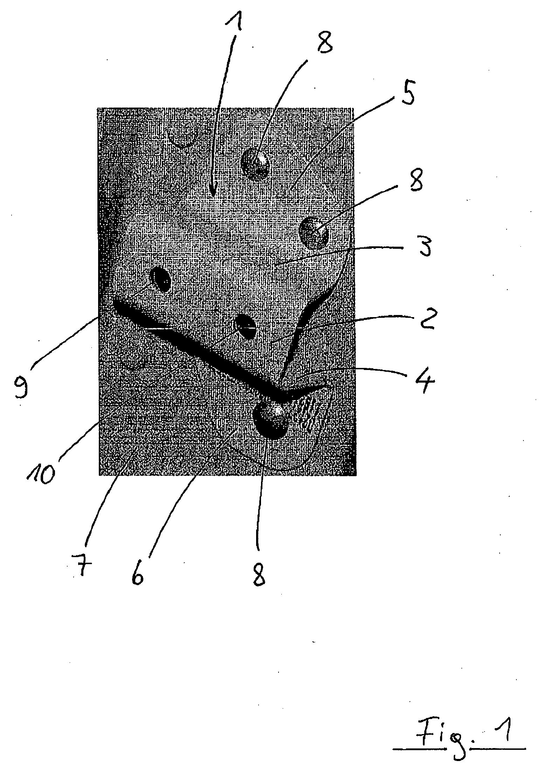

Fig. 1 illustrates an embodiment known operationally to the applicant of a retainer 1 for fastening components, in particular supply lines, of an aircraft or spacecraft. The supply lines can, for example, be electric and/or hydraulic supply lines. The retainer 1 has, for example, an approximately omega-shaped or hat-shaped cross-section. The retainer 1 is, for example, formed using a curved metal sheet or using a correspondingly shaped plastics material. A head portion 2 of the retainer 1 is provided with side flanks 3, 4 which are provided on both sides of the head portion 2 and are angled or bent away therefrom. A fastening foot 5, 6 extends laterally from each of the side flanks 3, 4. The fastening feet 5, 6 lie on a structural element 7, for example a stringer 7, a former 7, a fuselage shell 7 or the like, of the aircraft or spacecraft. The structural element 7 is, for example, formed using a fibre-reinforced plastics material and/or using a metal material. The retainer 1 is connected to the structural element 7 by means of rivets 8, which are guided through corresponding holes in the fastening feet 5, 6 and in the structural element 7. The retainer 1 preferably further comprises two holes 9, 10 on the head portion, into which holes, for example, a connecting element is inserted or screwed to connect the retainer 1 to the component. The connecting element can, for example, be formed as a cable tie.

The process steps for the attachment of the riveted retainer 1 are as follows. Firstly, the retainer 1 must be positioned at the desired position on the structural element 7, optionally preliminarily fixed and holes for the rivets 8 must be provided in the structural element 7. These holes are subsequently deflashed and a sealant is applied to the structural element 7.

After the retainer 1 has been positioned, the rivets 8 are placed and removed. The high process costs and high time expenditure of this procedure have proven to be disadvantageous. Furthermore, the placement of rivet holes in the structural element 7 means a structural weakening thereof and shavings occurring during drilling mean an additional soiling, which must be removed from the structural element 7 with as little residue as possible. An incorrectly placed retainer 1 can be removed, however the structurally weakening rivet holes remain in the structural element 7 after removal of the retainer.

Alternatively to riveting, the retainer 1 can be glued to the structural element 7. In this case, the following method steps are required. Firstly, a surface treatment of the structural element 7 and/or of the retainer 1 is required. For this, the surfaces to be glued are roughened and degreased. In this case, a top fibre layer of the structural element 7 can sometimes be disadvantageously damaged. An adhesive is subsequently applied to the retainer 1. The retainer 1 is positioned at the desired position on the structural element 7 and a contact pressure required for the adhesion is applied to the retainer 1 and maintained during the curing of the adhesive. For this, a temporary retaining device is generally required. The retention force of the adhesive joint is then tested in a non-destructive manner. In this fastening method, it has however proved disadvantageous that a high-strength adhesive system must be used in order to be able to transmit the same loads from the retainer 1 to the structural element 7 as in the case of the rivet connection described above. This means that if a retainer 1 is incorrectly placed, this retainer can only be removed with damage to or even destruction of the structural element 7. Furthermore, long curing times during the placement of the retainer 1 are required and, in order to avoid or reduce problems of quality of the adhesive joint, the adhesive joint is generally considerably oversized, which leads to cost and weight disadvantages.

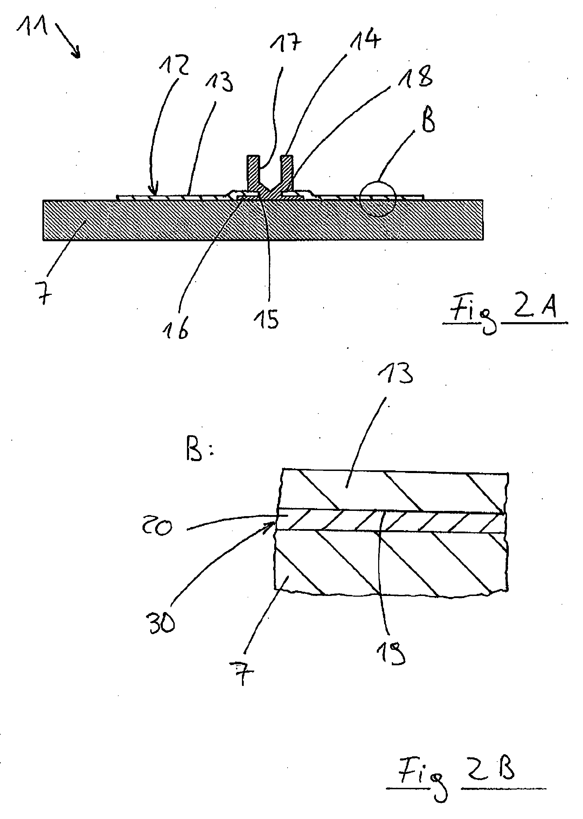

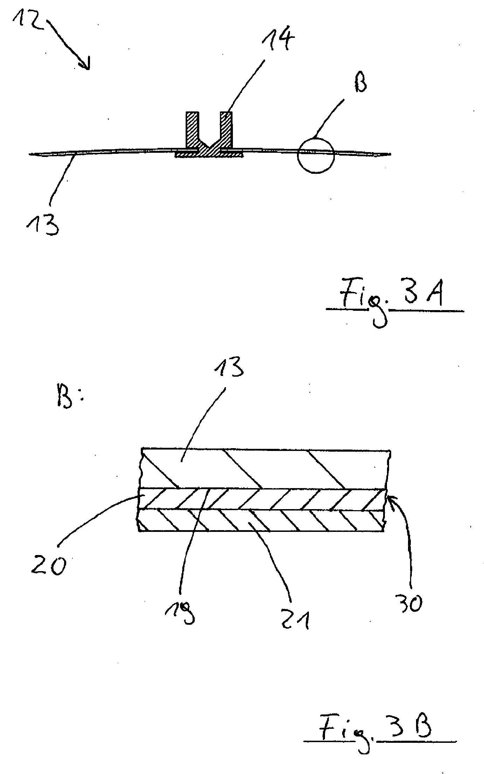

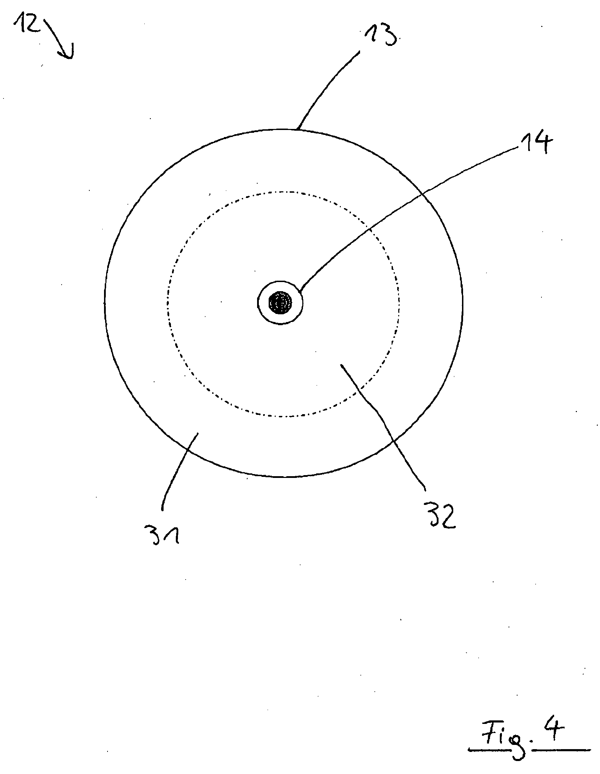

Fig. 2 to 4, which will be referred to simultaneously in the following, illustrate a fastening arrangement 11 for fastening a component, in particular a supply line, of an aircraft or spacecraft. The fastening arrangement 11 comprises in particular a structural element 7 of the aircraft or spacecraft. The structural element 7 is, for example, formed as a fuselage shell 7, a stringer 7, a former 7 or the like, of the aircraft or spacecraft. The structural element 7 comprises, for example, a fibre-reinforced plastics material, such as a carbon-fibre- and/or glass-fibre-reinforced plastics material, and/or a metal material, such as an aluminium, magnesium, and/or titanium material.

An adhesive retainer 12 of the fastening arrangement 11 preferably comprises a connection portion 13, in particular a flexible connection portion 13, having an adhesive surface 19 facing the structural element 7. The connection portion 13 is preferably configured in such a way that it adapts to a surface contour of the structural element and rests against the surface of the structural element 7. Owing to its flexible material properties the connection portion 13 follows any existing unevennesses or surface structures of the structural element 7. There is preferably no air gap between the connection portion 13 and the structural element 7. The connection portion 13 is preferably configured in a planar, in particular circular or plate-shaped manner as a connection tab 13 or connection plate 13, and comprises a flexible and/or resilient material. The adhesive surface 19 of the connection portion 13 is, for example, approximately ten times larger than an available adhesive surface of a retainer 1 according to Fig. 1. Silicones, elastomers and/or plasticised PVC can, for example, be used as a material for the connection portion 13. The connection portion 13 can also be formed using a curable material which loses Its flexibility during and/or after curing. Alternatively or in addition, the connection portion 13 can comprise a fibre braid or fibrous tissue, for example a prepreg material impregnated with a matrix material.

The adhesive retainer 12 also comprises a retaining portion 14 which is operatively connected to the connection portion 13 for receiving, at least in portions, the component to be fastened. The connection portion 13 preferably comprises a central seat 15, which is, for example, constructed as a recess 15 or hole 15, which serves to receive the retraining portion 14. The retaining portion 14 preferably has a substantially cylindrical basic shape having a foot portion 16 and receiving portion 17 for receiving the component, at least In portions. The component can, for example, be clamped or clipped into the receiving portion 17. The foot portion 16 can rest against the structural element 7 and be glued thereto. Furthermore, an additional element such as a cable tie can be provided, which serves to connect the component to the retaining portion 14. A peripheral annular groove 18 is preferably provided on the retaining portion 14 between the foot portion 16 and the receiving portion 17. The seat 15 of the connection portion 13 engages in the annular groove 18 with a positive fit. The retaining portion 14 is, for example, clipped into the seat 15. The retaining portion 14 is operatively connected to the connection portion 13, preferably with a non-positive and/or positive fit. The retaining portion 14 is preferably formed using a plastics material, for example a fibre-reinforced PEEK or a metal material, for example aluminium. Depending on the application, that is to say the component to be fastened, an individual retaining portion 14 can be used. The adhesive retainer 12 is thus constructed in a modular manner. Alternatively the retaining portion 14 can also be configured as a retainer 1 according to Fig. 1. Furthermore, the retaining portion 14 can be formed in one piece with the connection portion 13.

An adhesive material 20 is preferably provided between the adhesive surface 19 of the connection portion 13 and the structural element 7. The connection portion 13 can comprise the adhesive material 20 and/or be saturated or impregnated with the adhesive material 20.

The adhesive material 20 can be formed as a layer 30, in particular an adhesive layer 30, arranged between the adhesive surface 19 and the structural element 7. The connection portion 13 can be saturated or impregnated with the adhesive material 20 and can in addition comprise the layer 30 made of adhesive material 20. The connection portion 13 or the adhesive surface 19 can comprise a peelable protective film 21 which covers the adhesive material 20 or the layer 30 at least in portions. The protective film 21 is for example formed as a plastics material film, in particular a polyethelene film. The adhesive material 20 can, for example, comprise a physically setting adhesive, such as a dispersion adhesive, a chemically curing adhesive, such as an epoxy resin, an adhesive without a hardening mechanism, such as a pressure-sensitive adhesive and/or the like. The connection portion 13 can be impregnated with different adhesive materials 20 and/or comprise these materials. The adhesive material 20 preferably has an adhesive strength which is approximately ten times less than adhesive systems which are used to fasten a retainer 1 according to Fig. 1. In particular, the layer 30 can be provided in portions with different adhesive materials 20. For example, a first, for example annular, portion 31 of the adhesive surface 19 for the preliminary fixing of the adhesive retainer 12 to the structural element 7 can be provided with a pressure-sensitive adhesive, while a second, for example circular, portion 32 of the adhesive surface 19 comprises a curable epoxy resin for the definitive fastening of the adhesive retainer 12 to the structural element 7. In this way, the pressure-sensitive adhesive fixes the adhesive retainer 12 after the placement in the desired position on the structural element 7 until the epoxy resin is cured. The protective film 21 can be divided in accordance with the portions 31, 32. The number and/or shape of the portions is arbitrary.

In an aspect of the fastening arrangement 11 the flexible connection portion 13 is formed as a fibre material impregnated with a matrix material, that is to say, the connection portion 13 is impregnated with the adhesive material 20. The structural element 7 is also preferably formed using a fibre-reinforced plastics material, in particular a carbon-fibre-reinforced material. The structural element 7 can, however, also comprise a metal material or be formed thereof. To produce the fastening arrangement 11, the adhesive retainer 12 is positioned with the connection portion 13, which has not yet been cured, on the structural element 7 which has not yet been cured, and the structural element 7 is cured together with the adhesive retainer 12, preferably in an autoclave. The adhesive retainer 12 is thus integrally connected to the structural element 7.

In a further embodiment of the fastening arrangement 11, the layer 30 of the adhesive material 20 is arranged on the adhesive surface 19 in the form of a pressure-sensitive adhesive which is covered by the protective film 21. In this application, the structural element 7 is preferably formed using a cured fibre-reinforced plastics material and/or using a metal material. To position the adhesive retainer 12, the protective film 21 is peeled off and the adhesive retainer 12 is mounted in the desired position on the structural element 7 to form the fastening arrangement 11.

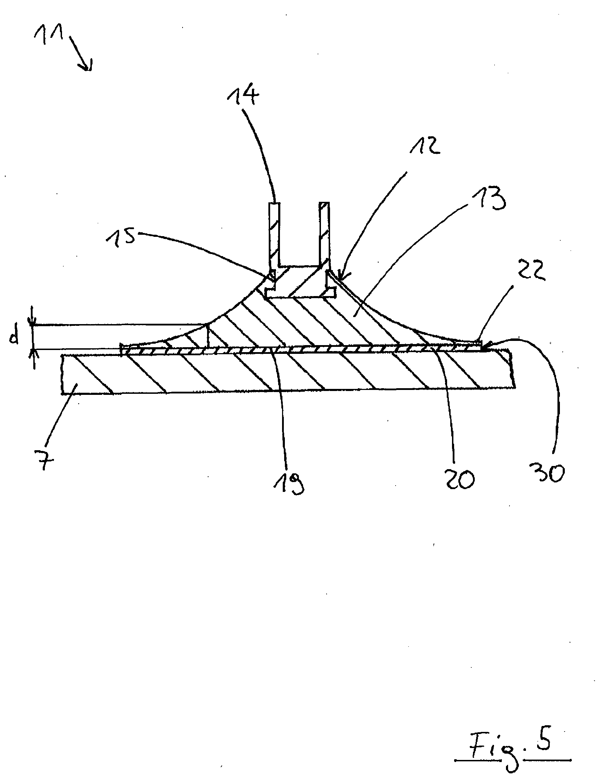

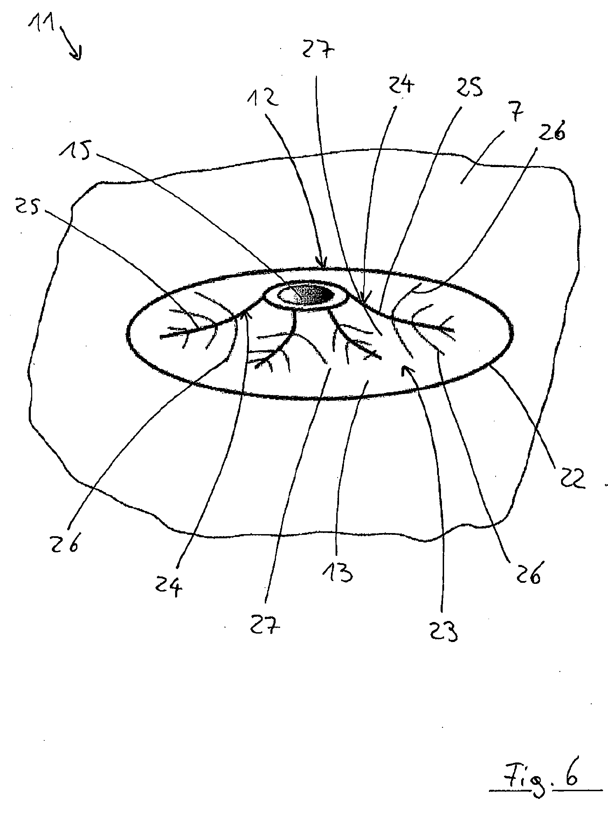

Fig. 5 to 8, referred to simultaneously in the following, illustrate a fastening arrangement 11 according to the invention. The fastening arrangement 11 according to Fig. 5 to 8 differs from the embodiment of the fastening arrangement 11 according to Fig. 2 to 4, basically owing to the configuration of the connection portion 13.

The fastening arrangement 11 comprises an adhesive retainer 12. The adhesive retainer 12 comprises a preferably plate-shaped connection portion 13 having an adhesive surface 19 facing a structural element 7 of an aircraft or spacecraft. A retaining portion 14 is preferably provided centrally in the connection portion 13, which retaining portion is received in a seat 15 arranged centrally in the connection portion 13. The retaining portion 14 is preferably constructed analogously to the embodiment of the adhesive retainer 12 according to Fig. 2 to 4. The retaining portion 14 is operatively connected to the connection portion 13, preferably with a positive and/or non-positive fit, for example by means of a clip connection and/or a screw connection. Alternatively, the retaining portion 14 can be formed integrally with the connection portion 13.

In a cross-sectional view according to Fig. 5, an outer contour of the connection portion 13 preferably has approximately the contour of a suction cup, the outer contour of the connection portion 13 being shown considerably cambered in Fig. 5. The outer contour of the connection portion 13 is basically formed by the adhesive surface 19, the seat 15 and two side walls extending on both sides from end regions of the adhesive surface 19 to the seat 15. The side walls preferably extend basically along a convex curved path, in particular along a portion of a circular path. Alternatively, the side walls can extend along a straight line, a stepped straight line or the like. A material stiffness of the connection portion 13 increases, starting from a peripheral region 22 of the connection portion 13, towards the retaining portion 14 and the seat 15. The material stiffness preferably increases continuously, starting from the peripheral region 22, towards the retaining portion 14 and the seat 15. The connection portion 13 is for example formed using a resilient and/or flexible material, such as a silicone material, an elastomer material and/or a plasticised PVC or the like. Furthermore, the connection portion 13 can comprise a fibrous tissue, fibre knitted fabric and/or fibre non-woven fabric, or be formed using one of these. A wall thickness d of the connection portion 13 preferably increases, in particular continuously, starting from the peripheral region 22 of the connection portion 13, towards the retaining portion 14 and the seat 15. In the peripheral region 22, the wall thickness d preferably has a value of from a few tenths of a millimetre to a few millimetres. In this case, the wall thickness d is defined as a distance measured vertically from the adhesive surface 19 to the outer contour of the connection portion 13. In particular, a gentle transition without a jump in thickness from the connection portion 13 to the structural element 7 is achieved, owing to the preferred increase in the wall thickness d from the peripheral region 22 to the retaining portion 14 and the seat. This allows an optimum force transmission from the connection portion 13 to the structural element 7. The adhesive retainer 12 preferably does not exert a notch effect on the structural component; in particular a uniform force transmission takes place.

The adhesive retainer 12, in particular the connection portion 13, preferably comprises a fibre reinforcement 23. The fibre reinforcement 23 comprises, for example, glass fibres, aramid fibres, wire, polymer fibres, carbon fibres and/or the like. A fibre density of the fibre reinforcement 23, that is to say a volume fraction of fibres per unit of volume, preferably increases, starting from the peripheral region 22 of the connection portion 13, towards the retaining portion 14 and the seat 15. In particular, this increase in the fibre density takes place continuously. The stiffness of the connection portion 13 is hereby increased, starting from the peripheral region 22, towards the seat 15 and the retaining portion 14. The fibre reinforcement 23 is in particular configured and/or arranged so as to be compatible with the force flow. The fibre reinforcement 23 preferably comprises at least one branching fibre braid 24, fibrous tissue 24 and/or fibre knitted fabric 24, which comprises main fibres 25 and secondary fibres 26 branching off from the main fibres 25. Every fibre braid 24 comprises at least a main fibre 25. In particular, the fibre reinforcement 23 comprises a plurality of fibre braids 24. The main fibres 25 preferably comprise a larger fibre cross-section than the secondary fibres 26. The main fibres 25 can comprise a different material to that of the secondary fibres 26. For example, the main fibres 25 are formed using a mixture of glass fibres and carbon fibres, while the secondary fibres 26 are formed using only glass fibres. The main fibres 25 preferably extend approximately radially, starting from the retaining portion 14 and the seat 15, in the direction of the peripheral region 22 of the connection portion 13, the secondary fibres 26 extending in intermediate regions 27 between the main fibres 25. The secondary fibres 26 preferably extend into the peripheral region 22 of the connection portion 13. The secondary fibres 26 can comprise further branches in even finer fibres. The fibre braid 24 in particular branches into increasingly fine fibres in the manner of a root or leaf vein. The main fibres 25 and the secondary fibres 26 preferably pass through the connection portion 13 in the manner of a leaf vein like the veins of a plant leaf.

An adhesive material 20 is arranged between the structural element 7 and the adhesive surface 19 of the connection portion 13. Before the application of the adhesive retainer 12 on the structural element 7, the adhesive material 20 is preferably covered with a peelable, flexible protective film. The protective film is in particular configured according to the embodiment of the adhesive retainer 12 according to Fig. 2 to 4. The adhesive material 20 is preferably arranged on the adhesive surface 19 in the form of a layer 30. Alternatively or in addition, the connection portion 13 can be saturated or impregnated with the adhesive material. The adhesive material 20 is for example formed as a pressure-sensitive adhesive or the like. Alternatively, the adhesive material 20 can be formed as a curable liquid adhesive or any other adhesive. The adhesive surface 19 can also comprise a combination of a pressure-sensitive adhesive, a curable liquid adhesive and/or any other adhesive.

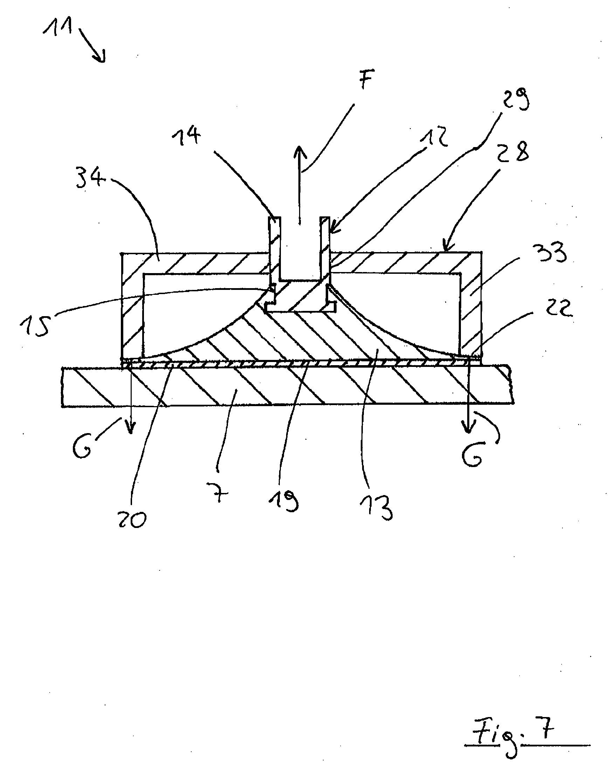

In a development of a fastening arrangement 11 according to Fig. 7, the fastening arrangement 11 additionally comprises a fixing device 28. The fixing device 28 comprises a side wall 33 which is preferably hollow and cylindrical, and a base 34 which closes the side wall 33 on one side. The hollow cylindrical side wall 33 of the fixing device 28 is in contiguous contact with the peripheral region 22 of the connection portion 13 and is supported thereon. The seat 15 of the connection portion 13 and the retaining portion 14 are guided, at least in portions, through a central recess 29 in the base 34 of the fixing device 28. The recess 29 of the fixing device 28 preferably comprises an engagement element, for example a thread, which is operatively engaged with a complementary opposing engagement element, for example also a thread, of the connection portion 13 and the retaining portion 14. A force F is applied to the connection portion 13 by means of an interaction of the engagement element with the opposing engagement element, which force preferably acts away from the structural element 7, the corresponding opposing force G, which acts in the direction of the structural element 7, being applied to the peripheral region 22 of the connection portion 13 by means of the hollow cylindrical side wall 33 of the fixing device 28. A vacuum can hereby be produced on the adhesive surface 19, which vacuum allows the adhesive retainer 12 to be securely fixed in its desired position during the curing of the adhesive material 20. After the curing is complete, the fixing device 28 is preferably detached.

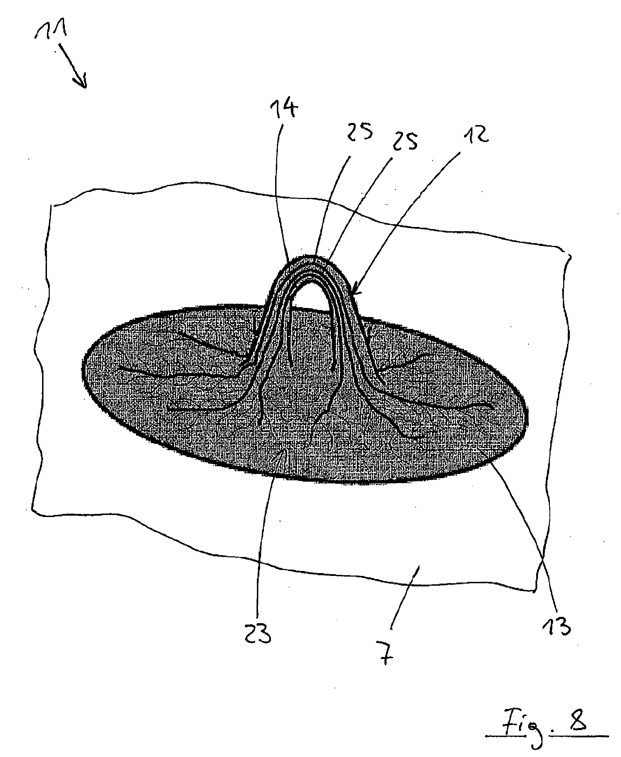

Fig. 8 illustrates a further preferred development of a fastening arrangement 11 having a structural element 7 and an adhesive retainer 12. The adhesive retainer 12 according to Fig. 5 differs from the adhesive retainer according to Fig. 5 to 7 only in that the retaining portion 14 of the adhesive retainer is formed integrally with the connection portion 13, main fibres 25 of the fibre braid 24 extending through the retainer portion 14.

To configure a fastening arrangement 11 according to Fig. 5 to 8, the adhesive retainer 12 is attached to the structural element 7 before the curing thereof and cured with the structural element. In this case, the adhesive material is in particular formed as a curable adhesive.

Alternatively, the adhesive retainer 12 is attached to the structural element 7, in particular a structural element 7 made of metal or a cured structural element 7 formed using a fibre composite material. The adhesive material 20 is then, for example, configured as a pressure-sensitive adhesive covered with the protective film 21. To produce the fastening arrangement 11, the protective film 21 is simply removed and the adhesive retainer is positioned.

To produce the connection portion 13 having the fibre reinforcement 23, the fibre reinforcement is firstly inserted into a mould and the mould is injected with a plastics material.

Compared to the riveted retainer 1 shown in Fig. 1, the process costs and processing time are reduced in the fastening arrangement 11 according to Fig. 2 to 8, as no drilling, deflashing, riveting and/or sealing is required. The quality of the connection is increased considerably, as no structural weakening of the structural element 7 occurs and no soiling by occurrent shavings is to be expected. Furthermore, in the fastening arrangement 11 according to Fig. 2 to 8, a very great flexibility of variations and the possibility of adaptation to customer requirements emerge, as the positioning of the connection portion 13 need only take place directly before or during the system installation.

Compared to the bonded retainer 1, the advantages of the reduction of the process costs and the processing time emerge, as no positioning, application of adhesive and application of contact pressure is required. Furthermore, the quality of the fastening arrangement 11 is increased, as the contact pressure and surface quality are always ensured, and the requirements for these two parameters are lower, owing to the large supporting surface of the connection portion 13 on the structural element. Furthermore, the fastening arrangement 11 according to Fig. 2 to 8 is Insensitive to surface unevennesses or impurities, as the flexible connection portion 13 has a very large adhesive surface in comparison to known solutions. The same adhesive force as in the case of the bonded connection of the retainer 1 according to Fig. 1 is produced, owing to the large adhesive surface 19 and the lower adhesive strength of the adhesive material 20 compared to known solutions. As the adhesive strength is considerably lower, a removal of an incorrectly placed adhesive retainer 12 is possible without damaging the structure of the structural element 7. Owing to the fibre reinforcement 23, occurrent forces are guided via the entire connection portion 13 and not only received at the force entry point.

The stated materials, numbers and dimensions are to be understood as examples and serve simply to illustrate the embodiments and developments of the present invention.

Of course, it is also conceivable to use the invention in other fields, particularly in vehicle construction or shipbuilding.

### List of reference numerals

- 1: holder
- 2: head portion
- 3: side flank
- 4: side flank
- 5: fastening foot
- 6: fastening foot
- 7: structural element
- 8: rivet
- 9: hole
- 10: hole
- 11: fastening arrangement
- 12: adhesive retainer
- 13: connection portion
- 14: retaining portion
- 15: seat
- 16: foot portion
- 17: receiving portion
- 18: annular groove
- 19: adhesive surface
- 20: adhesive material
- 21: protective film
- 22: peripheral region
- 23: fibre reinforcement
- 24: fibre braid
- 25: main fibre
- 26: secondary fibre
- 27: intermediate region
- 28: fixing device
- 29: recess
- 30: layer
- 31: portion
- 32: portion
- 33: side wall
- 34: base
- d: wall thickness
- F: force
- G: opposing force

## Claims

1. Fastening arrangement (11) for fastening a component of an aircraft or spacecraft, comprising:
a structural element (7) of the aircraft or spacecraft;
an adhesive retainer (12), which comprises a flexible connection portion (13) having an adhesive surface (19) for placing onto the structural element (7) and a retaining portion (14), operatively connected to the connection portion (13), for receiving the component, at least in portions; and
an adhesive material (20), which is arranged between the adhesive surface (19) and the structural element (7),
**characterised in that**
the adhesive retainer (12) comprises a fibre reinforcement (23), wherein the fibre reinforcement (23) comprises at least one branching fibre braid (24) which comprises main fibres (25) and secondary fibres (26) branching off from the main fibres (25).

2. Fastening arrangement according to claim 1,
**characterised in that**
a fibre density of the fibre reinforcement (23) increases, starting from a peripheral region (22) of the connection portion (13), towards the retaining portion (14).

3. Fastening arrangement according to claim 1,
**characterised in that**
the main fibres (25) have a larger fibre cross-section than the secondary fibres (26).

4. Fastening arrangement according to claim 1 or claim 2,
**characterised in that**
the main fibres (25) extend radially, starting from the retaining portion (14), in the direction of a peripheral region (22) of the connection portion (13), the secondary fibres (26) extending in intermediate regions (27) between the main fibres (26).

5. Fastening arrangement according to any one of claims 1 to 4,
**characterised in that**
the main fibres (25) of the fibre braid (24) pass through the retaining portion (14).

6. Fastening arrangement according to any one of the preceding claims,
**characterised in that**
a material stiffness of the connection portion (13) increases, starting from a peripheral region (22) of the connection portion (13), towards the retaining portion (14).

7. Fastening arrangement according to any one of the preceding claims,
**characterised in that**
a wall thickness (d) of the connection portion (13) increases, starting from a peripheral region (22) of the connection portion (13), towards the retaining portion (14).

8. Fastening arrangement according to any one of the preceding claims,
**characterised in that**
the retaining portion (14) is operatively connected to the connection portion (13) with a non-positive and/or positive fit.

9. Fastening arrangement according to any one of claims 1 to 7,
**characterised in that**
the retaining portion (14) is formed integrally with the connection portion (13).

10. Fastening arrangement according to any one of the preceding claims,
**characterised in that**
the connection portion (13) is impregnated with the adhesive material (20).

11. Fastening arrangement according to any one of the preceding claims,
**characterised in that**
the adhesive surface (19) of the connection portion comprises a layer (30) of the adhesive material (20), the layer (30) in particular comprising a peelable protective film (21).

12. Adhesive retainer (12) of a fastening arrangement (11) according to any one of the preceding claims.

13. Aircraft or spacecraft having a fastening arrangement (11) according to any one of claims 1 to 11 and/or an adhesive retainer (12) according to claim 12.

## Patentansprüche

1. Befestigungsanordnung (11) zum Befestigen einer Komponente eines Flugzeugs oder Raumfahrzeugs, die Folgendes umfasst:
ein strukturelles Element (7) des Flugzeugs oder Raumfahrzeugs;
eine Klebehalterung (12), die einen flexiblen Verbindungsabschnitt (13) mit einer Klebefläche (19) zum Platzieren auf dem strukturellen Element (7) sowie einen mit dem Verbindungsabschnitt (13) wirkverbundenen Halteabschnitt (14) zum wenigstens teilweisen Aufnehmen der Komponente umfasst; und
ein Klebematerial (20), das zwischen der Klebefläche (19) und dem strukturellen Element (7) angeordnet ist,
**dadurch gekennzeichnet, dass**
die Klebehalterung (12) eine Faserverstärkung (23) umfasst, wobei die Faserverstärkung (23) mindestens ein abzweigendes Fasergeflecht (24) umfasst, das Primärfasern (25) sowie von den Primärfasern (25) abzweigende Sekundärfasern (26) umfasst.

2. Befestigungsanordnung nach Anspruch 1,
**dadurch gekennzeichnet, dass**
eine Faserdichte der Faserverstärkung (23), an einer Umfangsregion (22) des Verbindungsabschnitts (13) beginnend, in Richtung des Halteabschnitts (14) zunimmt.

3. Befestigungsanordnung nach Anspruch 1,
**dadurch gekennzeichnet, dass**
die Primärfasern (25) einen größeren Faserquerschnitt haben als die Sekundärfasern (26)

4. Befestigungsanordnung nach Anspruch 1 oder Anspruch 2,
**dadurch gekennzeichnet, dass** sich die Primärfasern (25), an dem Halteabschnitt (14) beginnend, radial in der Richtung einer Umfangsregion (22) des Verbindungsabschnitts (13) erstrecken, wobei sich die Sekundärfasern (26) in Zwischenregionen (27) zwischen den Primärfasern (26) erstrecken.

5. Befestigungsanordnung nach einem der Ansprüche 1 bis 4,
**dadurch gekennzeichnet, dass**
die Primärfasern (25) des Fasergeflechts (24) durch den Halteabschnitt (14) hindurch verlaufen.

6. Befestigungsanordnung nach einem der vorangehenden Ansprüche,
**dadurch gekennzeichnet, dass**
eine Materialsteifigkeit des Verbindungsabschnitts (13), an einer Umfangsregion (22) des Verbindungsabschnitts (13) beginnend, in Richtung des Halteabschnitts (14) zunimmt.

7. Befestigungsanordnung nach einem der vorangehenden Ansprüche,
**dadurch gekennzeichnet, dass**
eine Wanddicke (d) des Verbindungsabschnitts (13), an einer Umfangsregion (22) des Verbindungsabschnitts (13) beginnend, in Richtung des Halteabschnitts (14) zunimmt.

8. Befestigungsanordnung nach einem der vorangehenden Ansprüche,
**dadurch gekennzeichnet, dass**
der Halteabschnitt (14) kraftschlüssig und/oder formschlüssig mit dem Verbindungsabschnitt (13) wirkverbunden ist.

9. Befestigungsanordnung nach einem der Ansprüche 1 bis 7,
**dadurch gekennzeichnet,**
**dass** der Halteabschnitt (14) einstückig mit dem Verbindungsabschnitt (13) ausgebildet ist.

10. Befestigungsanordnung nach einem der vorangehenden Ansprüche,
**dadurch gekennzeichnet, dass**
der Verbindungsabschnitt (13) mit dem Klebematerial (20) durchtränkt ist.

11. Befestigungsanordnung nach einem der vorangehenden Ansprüche,
**dadurch gekennzeichnet, dass** die Klebefläche (19) des Verbindungsabschnitts eine Schicht (30) des Klebematerials (20) umfasst, wobei die Schicht (30) insbesondere einen abziehbaren Schutzfilm (21) umfasst.

12. Klebehalterung (12) einer Befestigungsanordnung (11) nach einem der vorangehenden Ansprüche.

13. Flugzeug oder Raumfahrzeug mit einer Befestigungsanordnung (11) nach einem der Ansprüche 1 bis 11 und/oder einer Klebehalterung (12) nach Anspruch 12.

## Revendications

1. Agencement de fixation (11) destiné à fixer une pièce d'un avion ou d'un engin spatial, comprenant :
un élément structural (7) de l'avion ou de l'engin spatial ;
un dispositif de retenue adhésif (12), qui comprend une portion de liaison flexible (13) présentant une surface adhésive (19) destinée à être placée sur l'élément structural (7) et une portion de retenue (14), reliée en fonctionnement à la portion de liaison (13), destinée à recevoir la pièce, au moins dans des portions ; et
un matériau adhésif (20), qui est agencé entre la surface adhésive (19) et l'élément structural (7),
**caractérisé en ce que**
le dispositif de retenue adhésif (12) comprend un renfort de fibres (23), le renfort de fibres (23) comprenant au moins une tresse de fibres de dérivation (24) qui comprend des fibres principales (25) et des fibres secondaires (26) qui dérivent des fibres principales (25) .

2. Agencement de fixation selon la revendication 1,
**caractérisé en ce que**
une densité des fibres du renfort de fibres (23) augmente, en partant d'une région périphérique (22) de la portion de liaison (13), vers la portion de retenue (14).

3. Agencement de fixation selon la revendication 1,
**caractérisé en ce que**
les fibres principales (25) présentent une coupe transversale des fibres plus grande que les fibres secondaires (26).

4. Agencement de fixation selon la revendication 1 ou la revendication 2,
**caractérisé en ce que**
les fibres principales (25) s'étendent radialement, en partant de la portion de retenue (14), dans la direction d'une région périphérique (22) de la portion de liaison (13), les fibres secondaires (26) s'étendant dans des régions intermédiaires (27) entre les fibres principales (26).

5. Agencement de fixation selon une quelconque des revendications 1 à 4, **caractérisé en ce que** les fibres principales (25) de la tresse de fibres (24) passent à travers la portion de retenue (14).

6. Agencement de fixation selon une quelconque des revendications précédentes, **caractérisé en ce que** une rigidité de matériau de la portion de liaison (13) augmente, en partant d'une région périphérique (22) de la portion de liaison (13), vers la portion de retenue (14).

7. Agencement de fixation selon une quelconque des revendications précédentes, **caractérisé en ce que** une épaisseur de paroi (d) de la portion de liaison (13) augmente, en partant d'une région périphérique (22) de la portion de liaison (13), vers la portion de retenue (14).

8. Agencement de fixation selon une quelconque des revendications précédentes, **caractérisé en ce que** la portion de retenue (14) est reliée en fonctionnement à la portion de liaison (13) selon un assemblage par adhérence et/ou par forme.

9. Agencement de fixation selon une quelconque des revendications 1 à 7, **caractérisé en ce que** la portion de retenue (14) est formée d'un seul tenant avec la portion de liaison (13).

10. Agencement de fixation selon une quelconque des revendications précédentes, **caractérisé en ce que** la portion de liaison (13) est imprégnée du matériau adhésif (20).

11. Agencement de fixation selon une quelconque des revendications précédentes, **caractérisé en ce que** la surface adhésive (19) de la portion de liaison comprend une couche (30) du matériau adhésif (20), la couche (30) comprenant en particulier un film de protection pelable (21).

12. Dispositif de retenue adhésif (12) d'un agencement de fixation (11) selon une quelconque des revendications précédentes.

13. Avion ou engin spatial présentant un agencement de fixation (11) selon une quelconque des revendications 1 à 11 et/ou dispositif de retenue adhésif (12) selon la revendication 12.
